# EUROPÄISCHE PATENTANMELDUNG

(11) **EP 1 510 739 A1**
(43) Veröffentlichungstag der Anmeldung: **02.03.2005**
(21) Anmeldenummer: 04009636.4
(22) Anmeldetag: 23.04.2004
(51) Int. Cl.: F16K 11/052, F16K 27/10, F02D 9/04

(54) **Ventil, insbesondere Abgasventil**

(30) Priorität: 28.08.2003 DE 10339623
(71) Anmelder: Gustav Wahler GmbH u. Co.KG, 73730 Esslingen (DE)
(72) Erfinder: Wahler, Dieter, 73732 Esslingen (DE); Elsässer, Mathias, 73765 Neuhausen a.d.F. (DE); Weiser, Helmut, 70199 Stuttgart (DE)
(74) Vertreter: Kratzsch, Volkhard, Dipl.-Ing.

(57) **Zusammenfassung**

Ein Ventil, insbesondere Abgasventil (10), hat ein Ventilgehäuse (11), dessen Innenraum (12) mittels dreier Öffnungen (13, 14, 15) nach außen hin geöffnet ist, und einen der Steuerung des Durchgangs durch zumindest zwei dieser Öffnungen (13 bis 15) dienenden Ventilkörper (16), mittels dessen entsprechend einer jeweiligen Ventilbetätigung der Durchgang durch eine Öffnung jeweils sperrbar und von einer zweiten zur dritten Öffnung jeweils freigebbar ist. Das Ventilgehäuse (11) ist als etwa trichterförmiges oder topfförmiges Blech-Tiefziehteil mit einer Gehäuseöffnung (17) am engeren Ende und einer größeren Gehäuseöffnung (18) am weiteren Ende ausgebildet. Zumindest am letzteren ist eine die dortige Gehäuseöffnung (18) abdeckende separate Flanschplatte (19) dicht befestigt, die in Anordnung nebeneinander zwei der Öffnungen (13 bis 15) enthält (Fig. 3).

## Beschreibung

Die Erfindung bezieht sich auf ein Ventil, insbesondere Abgasventil, mit den Merkmalen im Oberbegriff des Anspruchs 1.

Es sind Ventile dieser Art bekannt, die als Ventilkörper in einem Ventilgehäuse eine pneumatisch oder anderweitig betätigte Umschaltklappe enthalten, wobei bei der Ausbildung des Ventils als Abgasventil die Umschaltklappe zum Schalten bzw. Umlenken eines Abgasstromes z. B. im Abgassystem einer Brennkraftmaschine dient. Bei derartigen bekannten Ventilen ist das Ventilgehäuse in der Regel aus Guss oder im IHU-Verfahren hergestellt. Die Ventile sind dadurch mit gewissen Nachteilen behaftet, z. B. haben diese Ventile insbesondere bei Gussgehäusen ein großes Gewicht. Außerdem sind die Herstellungskosten hoch, u. a. auch wegen entsprechend hoher Werkzeugkosten und auch wegen teurer Einzelteile. Nachteilig ist auch die schlechte Zugänglichkeit für die Bearbeitung des Ventilgehäuses auf der Innenseite. Ein etwaiger modularer Baukastenaufbau ist nicht möglich. Werden Ventile unterschiedlicher Abmessungen benötigt, sind jeweils entsprechende Werkzeuge etc. erforderlich, ohne dass eine andere Anpassung an andere Abmessungen möglich wäre.

Der Erfindung liegt die Aufgabe zugrunde, ein Ventil, insbesondere Abgasventil, der eingangs genannten Art zu schaffen, bei dem diese Nachteile beseitigt sind.

Die Aufgabe ist bei einem solchen Ventil, insbesondere Abgasventil, gemäß der Erfindung durch die Merkmale im Anspruch 1 gelöst. Weitere vorteilhafte Erfindungsmerkmale und Ausgestaltungen dazu ergeben sich aus den Unteransprüchen. Durch die Erfindung ist erreicht, dass sich das jeweilige Ventilgehäuse kostengünstig und zu erheblich niedrigerem Preis herstellen lässt. Ferner lassen sich nach Baukastensystem Baugruppen modular aufbauen, wobei eine Anpassung an andere Abmessungen einfach möglich ist. Z. B. können die Ventilgehäuse in ihren Abmessungen auch dann beibehalten und verwendet werden, wenn andere Öffnungsquerschnitte bei den Öffnungen der Ventilgehäuse gefordert werden. Diese Öffnungsquerschnitte können dann in einfacher Weise durch kostengünstig herstellbare Flanschplatten mit anders dimensionierten Bohrungen verwirklicht werden. Die einzelnen Bestandteile des Ventils, insbesondere des Ventilgehäuses, lassen sich ferner gewichtsoptimiert herstellen. Von Vorteil ist, dass somit das gesamte Ventilgehäuse besonders leicht gestaltet werden kann. Ein Großteil der Gehäuseteile kann außerdem sehr einfach hergestellt werden, wobei die technisch komplexen Bearbeitungen bzw. Anformungen auf die jeweiligen Flanschplatten konzentriert sind und nicht beim Ventilgehäusekörper selbst vorzunehmen sind. Auch die Anordnung einer Schwenkmechanik, zumindest der Schwenklagerung, des Ventilkörpers ist in besonders einfacher Weise an einer Flanschplatte möglich. Von Vorteil ist ferner eine gute Zugänglichkeit des Ventilgehäusekörpers, da die Einzelteile, insbesondere Flanschplatten, erst am Schluss angebracht und damit verbunden werden. Durch die Ausbildung des Ventilgehäusekörpers als aus Blech bestehendes Tiefziehteil ist die Herstellung besonders einfach. Die Öffnungsquerschnitte der einzelnen Öffnungen werden nicht durch die Gehäuseenden sondern in besonders einfacher Weise durch die Bohrungsgröße in den Flanschen bestimmt. Bei der Gestaltung des Ventilgehäuses mit eingesteckten Rohrstücken ergibt sich der besondere Vorteil, dass die Rohrstücke in kostengünstiger Weise aus Stangenmaterial hergestellt werden können und somit diese Rohrstücke und der Ventilgehäusekörper besonders einfach hergestellt werden können. Etwaige Unebenheiten bzw. Ungenauigkeiten bezüglich der Bearbeitung und/oder Positionierung der Rohrstücke können durch kardanische Lagerung des Ventilkörpers in einfacher Weise ausgeglichen werden.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische, perspektivische Ansicht eines inbesondere als Abgasventil gestalteten Ventils gemäß einem ersten Ausführungsbeispiel,
- Fig. 2: eine schematische Seitenansicht des Ventils in Fig. 1,
- Fig. 3: einen schematischen Schnitt des Ventils in Fig. 1,
- Fig. 4 und 5: jeweils einen schematischen Schnitt eines insbesondere als Abgasventil gestalteten Ventils gemäß einem zweiten bzw. dritten Ausführungsbeispiel.

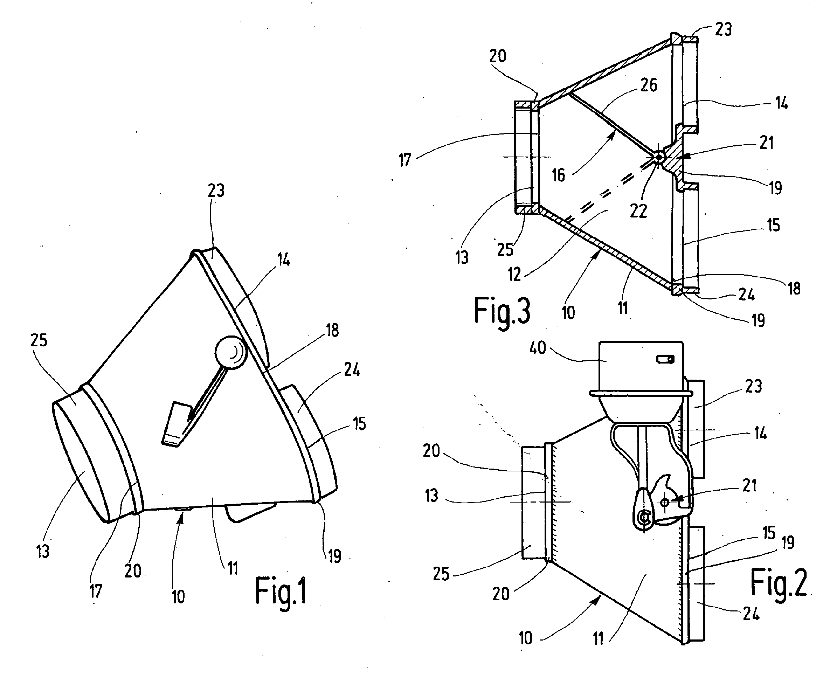

In Fig. 1 bis 3 ist ein Ventil gemäß einem ersten Ausführungsbeispiel gezeigt, das insbesondere als Abgasventil 10 ausgebildet ist und als solches zum Schalten bzw. Umlenken des Abgasstromes im Abgassystem von Brennkraftmaschinen dienen kann. Das Abgasventil 10 weist ein Ventilgehäuse 11 auf, dessen Innenraum 12 mittels dreier Öffnungen 13, 14 und 15 nach außen hin geöffnet ist. Das Abgasventil weist ferner einen Ventilkörper 16 auf, der der Steuerung des Durchganges durch zumindest zwei dieser Öffnungen 13, 14, 15 dient, wobei mittels des Ventilkörpers 16 entsprechend einer jeweiligen Ventilbetätigung, die mittels eines schematisch angedeuteten Aktuators 40 erfolgt, der Durchgang durch eine Öffnung jeweils sperrbar und von einer zweiten Öffnung zur dritten Öffnung jeweils freigebbar ist. Der Aktuator 40 ist nur schematisch dargestellt. Die Betätigung des Ventilkörpers 16 kann darüber z. B. pneumatisch oder auch anderweitig geschehen.

Das Ventilgehäuse 11 besteht aus Blech und ist als etwa trichterförmiges Blech-Tiefziehteil mit einer Gehäuseöffnung 17 am engeren Ende und einer größeren Gehäuseöffnung 18 am gegenüberliegenden, weiteren Ende ausgebildet. Zumindest am weiteren Ende des Ventilgehäuses 11 ist eine separate Flanschplatte 19 dicht befestigt, die die dortige Gehäuseöffnung 18 abdeckt. Diese Flanschplatte 19 enthält in Anordnung nebeneinander zwei der insgesamt drei Öffnungen, beim gezeigten Ausführungsbeispiel die Öffnungen 14 und 15.

An der andere Gehäuseöffnung 17 am engeren Ende des Ventilgehäuses 11 ist eine weitere Flanschplatte 20 dicht befestigt, die eine der Öffnungen enthält, beim gezeigten Ausführungsbeispiel die Öffnung 13.

Der Durchlass durch die Öffnungen 13, 14 und 15 in den jeweiligen Flanschplatten 19 bzw. 20 ist dabei durch den Öffnungsquerschnitt der jeweiligen Öffnung in der Flanschplatte vorgegeben. Die Öffnungen 13, 14 und 15 in der mindestens einen Flanschplatte 19, 20 sind jeweils als Bohrungen in der Flanschplatte ausgebildet. Zumindest eine der Flanschplatten, beim gezeigten Ausführungsbeispiel beide Flanschplatten 19, 20, ist am Ventilgehäuse 11 durch Bördeln, Schweißen, Löten od. dgl. befestigt.

An derjenigen Flanschplatte 19, die an der Gehäuseöffnung 18 am weiteren Ende des Ventilgehäuses 11 befestigt ist, ist eine schematisch angedeutete Schwenkmechanik 21, zumindest eine Schwenklagerung 22, des Ventilkörpers 16 angebracht.

Die Flanschplatten 19, 20 weisen je Öffnung 13, 14, 15 einen die letztgenannte Öffnung umgebenden Kragen 23, 24, 25 auf.

Beim gezeigten Ausführungsbeispiel ist die eine Öffnung 13 am engeren Ende des Ventilgehäuses 11 als Einlassöffnung ausgebildet und dient dort bei der Ausbildung als Abgasventil 10 dem Abgaseintritt. Die beiden anderen Öffnungen 14, 15 am anderen, weiteren Gehäuseende des Ventilgehäuses 11 sind als jeweilige Auslassöffnungen ausgebildet und dienen dort dem Austritt des Abgases.

Es versteht sich, dass die Verhältnisse auch vertauscht sein können, derart, dass die beiden Öffnungen 14, 15 dem Abgaseintritt und die Öffnung 13 dem Abgasaustritt dienen.

Der Ventilkörper 16 ist als Klappe 26 ausgebildet, die im Innenraum 12 des Ventilgehäuses 11 schwenkbar gelagert ist und in der jeweiligen Endstellung den Durchgang von einer Öffnung 13 zur anderen Öffnung 14 bzw. zur Öffnung 15 sperrt. In dieser Endstellung bildet die Klappe 26 dabei eine innere Leitwand im Gehäuseinnenraum 12 und gewährleistet gute Strömungsverhältnisse. Die Klappe 26 liegt in der jeweiligen Endstellung innen am Ventilgehäuse 11 dicht an. In der in Fig. 3 gezeigten Endstellung der Klappe 26 ist der Durchgang durch die Öffnung 14 verschlossen, während die Öffnung 15 für den Auslass von bei der Öffnung 13 eingeleitetem Abgas geöffnet ist. In Fig. 3 ist gestrichelt angedeutet, dass die Klappe 26 um einen Winkel von etwa 45° in die andere Endstellung schwenkbar ist, in der der Durchgang durch die Öffnung 15 gesperrt und der Durchgang von der Öffnung 13 zur Öffnung 14 freigegeben ist. Wenn gewünscht, sind auch Zwischenstellungen der Klappe 26 mit Durchlass durch beide Öffnungen 14, 15 möglich.

Wie insbesondere aus Fig. 3 ersichtlich ist, ist die Klappe 26 etwa mittig zwischen beiden Öffnungen 14, 15 der am weiteren Ende des Ventilgehäuses 11 befestigten Flanschplatte 19 schwenkbar, vorzugsweise kardanisch, gelagert.

Durch die Ausbildung des Ventilgehäuses 11 als etwa trichterförmiges Blech-Tiefziehteil lässt sich das Ventilgehäuse 11 preiswert herstellen. Die einzelnen Teile des Ventilgehäuses 11, nämlich letzteres sowie die Flanschplatten 19, 20, lassen sich nach dem Baukastensystem modular aufbauen und können leicht an andere Abmessungen angepasst werden. Die einzelnen Teile des Ventilgehäuses 11 lassen sich ferner jeweils gewichtsoptimiert herstellen, so dass das gesamte Ventilgehäuse 11 ein möglichst geringes Gewicht hat. Auch ist die Herstellung der einzelnen Teile des Ventilgehäuses 11 besonders einfach. Die technisch komplexen Bearbeitungen bzw. Anformungen sind auf die Flanschplatten 19, 20 konzentriert. Da die Einzelteile erst am Schluss gefügt werden, ergibt sich eine gute Zugänglichkeit für die Bearbeitung. Insgesamt ist das Ventil, insbesondere in Gestalt als Abgasventil 10, leicht, kostengünstig und einfach im Aufbau und bei allem in hohem Maße betriebssicher.

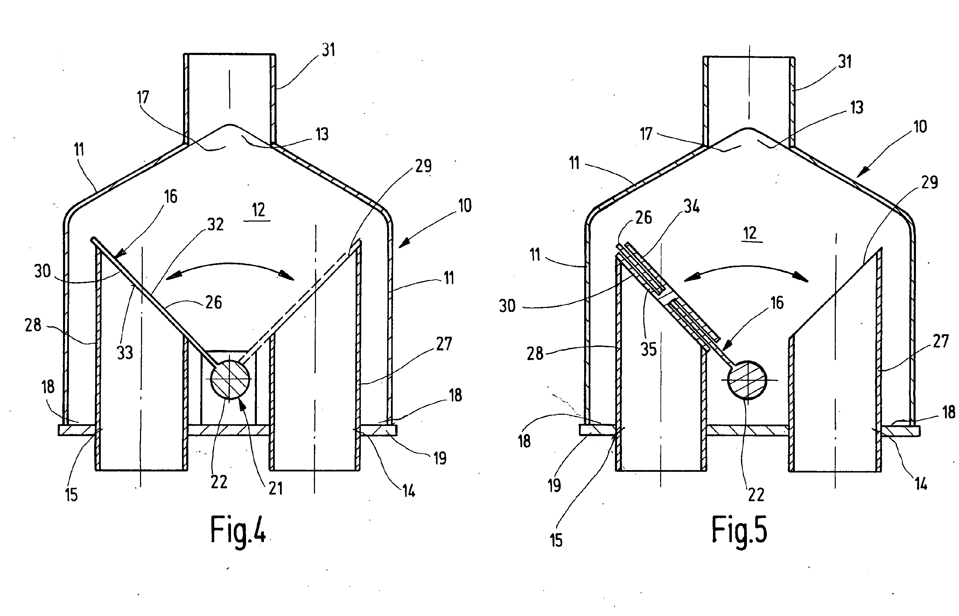

Bei dem in Fig. 4 und Fig. 5 gezeigten zweiten bzw. dritten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispiels in Fig. 1 bis 3 verwiesen ist.

Beim zweiten Ausführungsbeispiel gemäß Fig. 4 ist das Ventilgehäuse 11 ebenfalls als Blech-Tiefziehteil ausgebildet und dabei etwa topfförmig oder becherförmig. Am weiteren Ende des Ventilgehäuses 11 ist eine Flanschplatte 19 dicht befestigt, die in Anordnung nebeneinander zwei Öffnungen 14 und 15 enthält, wobei in diese Öffnungen 14 und 15 jeweils Rohrstücke 27, 28 eingesteckt sind, die mit einem Ende in den Innenraum 12 des Ventilgehäuses 11 hineinragen und am dortigen Ende jeweilige Anlageflächen 29 bzw. 30 für den Ventilkörper 16, insbesondere die Klappe 26, in der jeweiligen Schließstellung bilden. An dem einen, in das Ventilgehäuse 11 hineinragenden Ende sind die Rohrstücke 27, 28 abgeschrägt, z. B. unter einem Winkel von etwa 45°, derart, dass die abgeschrägten Anlageflächen 29, 30 beider Rohrstücke 27, 28 etwa V-förmig zueinander ausgerichtet sind. Die beiden eingesteckten Rohrstücke 27, 28 stehen mit ihrem anderen Ende über die Flanschplatte 19 hinweg über. Sie sind in der Flanschplatte 19, in die sie eingesteckt sind, durch Schweißen, Löten, Bördeln od. dgl. befestigt.

Bei der Gehäuseöffnung 17 am anderen, engeren Ende des Ventilgehäuses 11 ist ein Rohrstück 31 vorgesehen, das mit dem Ventilgehäuse 11 entweder einstückig ist oder damit dicht verbunden ist, z. B. durch Schweißen, Löten, Bördeln od. dgl..

Alle Rohrstücke 27, 28, 31 sind aus Blech-Stangenmaterial gebildet. Auf diese Weise können das Ventilgehäuse 11 und die Rohrstücke 27, 28, 31 sehr einfach ausgeführt werden. Insgesamt gelten auch für das zweite Ausführungsbeispiel die gleichen Vorteile, die vorstehend zum ersten Ausführungsbeispiel dargelegt sind.

Die Klappe 26 weist auf jeder Klappenseite eine mit der jeweiligen Anlagefläche 29, 30 zusammenwirkende Dichtfläche 32, 33 auf, die in Fig. 4 durch die Klappe selbst gebildet ist.

Beim dritten Ausführungsbeispiel in Fig. 5 ist statt dessen als Dichtfläche 32, 33 je Klappenseite eine Platte 34, 35 vorgesehen, wobei die beiden Platten 34, 35 miteinander und/oder mit der Klappe 26 und/oder mit einem Halter od. dgl. gelenkig, z. B. kardanisch, verbunden sind, wodurch Unebenheiten bzw. Ungenauigkeiten bezüglich der Bearbeitung der Rohrstücke 27, 28 und bezüglich der Positionierung dieser in einfacher Weise ausgeglichen werden.

## Patentansprüche

1. Ventil, insbesondere Abgasventil (10), mit einem Ventilgehäuse (11), dessen Innenraum (12) mittels dreier Öffnungen (13, 14, 15) nach außen hin geöffnet ist, und mit einem der Steuerung des Durchganges durch zumindest zwei dieser Öffnungen (13, 14, 15) dienenden Ventilkörper (16), mittels dessen entsprechend einer jeweiligen Ventilbetätigung der Durchgang durch eine Öffnung jeweils sperrbar und von einer zweiten Öffnung zur dritten Öffnung jeweils freigebbar ist,
**dadurch gekennzeichnet,**
**dass** das Ventilgehäuse (11) als etwa trichterförmiges oder topfförmiges Blech-Tiefziehteil mit einer Gehäuseöffnung (17) am engeren Ende und einer größeren Gehäuseöffnung (18) am weiteren Ende ausgebildet ist, dass zumindest am weiteren Ende des Ventilgehäuses (11) eine die dortige Gehäuseöffnung (18) abdeckende separate Flanschplatte (19) dicht befestigt ist und dass die Flanschplatte (19) in Anordnung nebeneinander zwei der Öffnungen (13, 14, 15) enthält.

2. Ventil nach Anspruch 1,
**dadurch gekennzeichnet,**
**dass** an der Gehäuseöffnung (17) am engeren Ende eine weitere Flanschplatte (20) dicht befestigt ist, die eine der Öffnungen (13, 14, 15) enthält.

3. Ventil nach Anspruch 1 oder 2,
**dadurch gekennzeichnet, dass** der Durchlass durch die Öffnungen (13, 14, 15) durch den Öffnungsquerschnitt der jeweiligen Öffnung in der mindestens einen Flanschplatte (19, 20) vorgegeben wird.

4. Ventil nach einem der Ansprüche 1 bis 3,
**dadurch gekennzeichnet,**
**dass** die Öffnungen (13, 14, 15) in der mindestens einen Flanschplatte (19, 20) als Bohrungen ausgebildet sind.

5. Ventil nach einem der Ansprüche 1 bis 4,
**dadurch gekennzeichnet,**
**dass** an der Flanschplatte (19), die an der Gehäuseöffnung (18) am weiteren Ende des Ventilgehäuses (11) befestigt ist, eine Schwenkmechanik (21), zumindest eine Schwenklagerung (22), des Ventilkörpers (16) angebracht ist.

6. Ventil nach einem der Ansprüche 1 bis 5,
**dadurch gekennzeichnet,**
**dass** zumindest eine der Flanschplatten (19, 20) am Ventilgehäuse (11) durch Bördeln, Schweißen, Löten od. dgl. befestigt ist.

7. Ventil nach einem der Ansprüche 1 bis 6,
**dadurch gekennzeichnet,**
**dass** die Flanschplatten (19,20) je Öffnung (13, 14, 15) einen die Öffnung (13, 14, 15) umgebende Kragen (23, 24, 25) aufweisen.

8. Ventil nach einem der Ansprüche 1 bis 7,
**dadurch gekennzeichnet,**
**dass** die eine Öffnung (13) an einem Ende, insbesondere am engeren Ende, des Ventilgehäuses (11) als Einlassöffnung ausgebildet ist und dass die beiden anderen Öffnungen (14, 15) am anderen Ende, insbesondere am weiteren Gehäuseende, des Ventilgehäuses (11) als jeweilige Auslassöffnungen ausgebildet sind, oder dass die Einlass- und Auslassverhältnisse vertauscht sind.

9. Ventil nach einem der Ansprüche 1 bis 8,
**dadurch gekennzeichnet,**
**dass** der Ventilkörper (16) als im Innenraum (12) des Ventilgehäuses (11) schwenkbar gelagerte Klappe (26) ausgebildet ist, die in der jeweiligen Endstellung den Durchgang von einer Öffnung (13) zur anderen Öffnung (14 bzw. 15) sperrt und dabei als innere Leitwand im Gehäuseinnenraum (12) ausgebildet ist.

10. Ventil nach Anspruch 9,
**dadurch gekennzeichnet,**
**dass** die Klappe (26) in der jeweiligen Endstellung innen am Ventilgehäuse (11) dicht anliegt.

11. Ventil nach Anspruch 9 oder 10,
**dadurch gekennzeichnet,**
**dass** die Klappe (26) etwa mittig zwischen beiden Öffnungen (14, 15) der am weiteren Ende des Ventilgehäuses (11) befestigten Flanschplatte (19) schwenkbar, vorzugsweise kardanisch, gelagert ist.

12. Ventil nach einem der Ansprüche 1 bis 11,
**dadurch gekennzeichnet,**
**dass** in die beiden Öffnungen (14, 15) der Flanschplatte (19) an der Gehäuseöffnung (18) am weiteren Ende des insbesondere etwa topfförmigen Ventilgehäuses (11) jeweils Rohrstücke (27, 28) eingesteckt sind, die mit einem Ende in den Innenraum (12) des Ventilgehäuses (11) hineinragen und am dortigen Ende jeweilige Anlageflächen (29, 30) für den Ventilkörper (16), insbesondere die Klappe (26), in der jeweiligen Schließstellung bilden.

13. Ventil nach Anspruch 12,
**dadurch gekennzeichnet,**
**dass** die Rohrstücke (27, 28) an dem einen Ende abgeschrägt sind, z. B. unter einem Winkel von etwa 45°, derart, dass die abgeschrägten Anlageflächen (29, 30) beider Rohrstücke (27, 28) etwa V-förmig zueinander ausgerichtet sind.

14. Ventil nach Anspruch 12 oder 13,
**dadurch gekennzeichnet,**
**dass** die beiden eingesteckten Rohrstücke (27, 28) mit ihrem anderen Ende über die Flanschplatte (19) hinweg überstehen.

15. Ventil nach einem der Ansprüche 12 bis 14,
**dadurch gekennzeichnet,**
**dass** die beiden eingesteckten Rohrstücke (27, 28) in der Flanschplatte (19), in die diese eingesteckt sind, durch Schweißen, Löten, Bördeln od. dgl. befestigt sind.

16. Ventil nach einem der Ansprüche 12 bis 15,
**dadurch gekennzeichnet,**
**dass** bei der Gehäuseöffnung (17) am engeren Ende des Ventilgehäuses (11) ein Rohrstück (31) vorgesehen ist, das mit dem Ventilgehäuse (11) einstückig oder dicht verbunden ist, z. B. durch Schweißen, Löten, Bördeln od. dgl..

17. Ventil nach einem der Ansprüche 12 bis 16,
**dadurch gekennzeichnet,**
**dass** die Rohrstücke (27, 28, 31) aus Blech-Stangenmaterial gebildet sind.

18. Ventil nach einem der Ansprüche 12 bis 17,
**dadurch gekennzeichnet,**
**dass** die Klappe (26) auf jeder Klappenseite eine mit einer Anlagenfläche (29, 30) zusammenwirkende Dichtfläche (32, 33) aufweist.

19. Ventil nach Anspruch 18,
**dadurch gekennzeichnet,**
**dass** als Dichtfläche (32, 33) je Klappenseite eine Platte (34, 35) vorgesehen ist.

20. Ventil nach Anspruch 19,
**dadurch gekennzeichnet,**
**dass** die beiden Platten (34, 35) miteinander und/oder mit der Klappe (26) und/oder mit einem Halter gelenkig, z. B. kardanisch, verbunden sind.
